(19)

**Europäisches Patentamt**
**European Patent Office**
**Office européen des brevets**

(11) **EP 4 699 983 A1**

(12) **EUROPEAN PATENT APPLICATION**
published in accordance with Art. 153(4) EPC

(43) Date of publication:
**25.02.2026 Bulletin 2026/09**

(21) Application number: **24823675.4**

(22) Date of filing: **11.06.2024**

(51) International Patent Classification (IPC):
*C01B 33/32* (2006.01)    *H01M 4/36* (2006.01)
*H01M 4/58* (2010.01)    *H01M 4/62* (2006.01)
*H01M 4/02* (2006.01)

(52) Cooperative Patent Classification (CPC):
**C01B 33/32; H01M 4/02; H01M 4/36; H01M 4/58;**
**H01M 4/62;** Y02E 60/10

(86) International application number:
**PCT/KR2024/007991**

(87) International publication number:
**WO 2024/258157 (19.12.2024 Gazette 2024/51)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **12.06.2023 KR 20230075099**

(71) Applicant: **LG Chem, Ltd.**
**Seoul 07336 (KR)**

(72) Inventors:
• **KO, Sang Ho**
**Daejeon 34122 (KR)**
• **KIM, Kong Kyeom**
**Daejeon 34122 (KR)**
• **CHOI, Won Yeong**
**Daejeon 34122 (KR)**
• **UH, Hyoun Soo**
**Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR MANUFACTURING LITHIUM SILICON OXIDE COMPOSITE**

(57)    The present invention relates to a method of preparing a lithium silicon oxide composite in which gas generation is suppressed when an aqueous slurry is used, wherein the present invention provides the method of preparing a lithium silicon oxide composite which includes steps of adding silicon or silicon oxide (SiOx, $0<x\leq 2$) to a lithium compound-containing solution and stirring the solution in an inert gas atmosphere (S1); and separating particles formed, and drying and sintering the particles (S2), wherein a concentration of the lithium compound-containing solution is greater than 0.5 M and less than 1.0 M.

EP 4 699 983 A1

**Description**

**TECHNICAL FIELD**

[Cross-reference to Related Applications]

This application claims priority from Korean Patent Application No. 10-2023-0075099, filed on June 12, 2023, the disclosure of which is incorporated by reference herein.

[Technical Field]

The present invention relates to a method of preparing a lithium silicon oxide composite in which gas generation is suppressed when an aqueous slurry is used.

**BACKGROUND ART**

Recently, demand for a lithium secondary battery having high stability as well as high capacity and high output is increasing as an application area of lithium secondary batteries is rapidly expanding not only to electricity, electronics, communication, and power supply of electronic devices such as computers, but also to power storage supply of automobiles or large-area devices such as power storage devices.

In general, a positive electrode and a negative electrode are prepared by a method of applying slurries, in which a positive electrode material capable of intercalating and deintercalating lithium ions or a negative electrode material capable of storing or releasing lithium ions and optionally a binder and a conductive agent are mixed, onto a positive electrode collector and a negative electrode collector, respectively, and removing a solvent by heat or the like, and, after the positive electrode and the negative electrode are stacked on both sides of a separator to form an electrode assembly having a predetermined shape, a lithium secondary battery is prepared by inserting the electrode assembly and a non-aqueous electrolyte solution into a battery case.

A graphite-based negative electrode material, as a representative negative electrode material, exhibits stable capacity retention characteristics even during long cycles due to excellent structural stability even during intercalation and deintercalation of lithium, but is unsuitable as a high-capacity and high-output material currently required due to its low theoretical capacity (350 mAh/g for $LiC_6$). Accordingly, a silicon-based negative electrode material, such as silicon or silicon oxide, is attracting attention as a negative electrode material for next-generation lithium secondary batteries due to a low reduction potential with lithium, abundant reserves, and theoretical capacity (2700~4200 mAh/g for $Li_{4.4}Si$) that is about 10 times higher than that of graphite. However, despite these advantages, the silicon-based negative electrode material consumes about three times more lithium than the graphite-based negative electrode material, and there is a problem in that initial irreversible capacity increases because a large amount of lithium intercalated into the negative electrode during initial charge does not return to the positive electrode due to volume expansion and surface side reaction when a lithium secondary battery using the silicon-based negative electrode material is charged and discharged.

Also, particularly with respect to a silicon oxide (SiOx) particle, in order to solve an initial efficiency problem caused by an irreversible reaction of Li ions, various attempts have been made to improve the initial efficiency by doping with magnesium (Mg) or prelithiation of the silicon oxide particle with lithium (Li), but, in a case in which a negative electrode material slurry is prepared by using the silicon oxide particles through a water-based process, $Li_2O$ generated in the prelithiated silicon oxide particle reacts with $H_2O$ to form a LiOH byproduct, and, since viscosity of the slurry is reduced and hydrogen is generated due to the LiOH byproduct, coating properties of the slurry is deteriorated, and, as a result, there are still problems of volume expansion and reduced adhesion between a negative electrode material layer and the current collector.

Thus, there is a need to develop a negative electrode material in which a change in viscosity is small and hydrogen generation is suppressed when a negative electrode material slurry is prepared by the water-based process while initial capacity and capacity retention are excellent, and the volume expansion is suppressed during charge and discharge of a negative electrode using the negative electrode material.

[Prior Art Documents]

[Patent Documents]

(Patent Document 1) KR 10-2014-0091388A

**DISCLOSURE OF THE INVENTION**

## TECHNICAL PROBLEM

An aspect of the present invention provides a method of preparing a lithium silicon oxide composite that is useful as a negative electrode material in which there is almost no change in viscosity and hydrogen generation is suppressed when a slurry is prepared by a water-based process while initial capacity and capacity retention are excellent.

## TECHNICAL SOLUTION

In order to solve the above-described tasks, the present invention provides a method of preparing a lithium silicon oxide composite.

(1) The present invention provides a method of preparing a lithium silicon oxide composite which includes steps of: adding silicon or silicon oxide (SiOx, $0<x\leq2$) to a lithium compound-containing solution and stirring the solution in an inert gas atmosphere (S1); and separating particles formed, and drying and sintering the particles (S2), wherein a concentration of the lithium compound-containing solution is greater than 0.5 M and less than 1.0 M.

(2) The present invention provides the method of (1) above, wherein the lithium compound-containing solution is prepared by adding a polycyclic aromatic compound or a linear polyphenylene compound to an organic solvent and stirring to prepare a polycyclic aromatic compound solution or a linear polyphenylene compound solution, and adding lithium particles to the polycyclic aromatic compound solution or the linear polyphenylene compound solution and performing a reaction.

(3) The present invention provides the method of (2) above, wherein the polycyclic aromatic compound is at least one selected from the group consisting of naphthalene, anthracene, phenanthrene, naphthacene, pentacene, pyrene, picene, triphenylene, coronene, and chrysene.

(4) The present invention provides the method of (2) or (3) above, wherein the linear polyphenylene compound is at least one selected from the group consisting of biphenyl and terphenyl.

(5) The present invention provides the method of any one of (1) to (4) above, wherein the silicon and the silicon oxide include a carbon coating layer on surfaces of the silicon and the silicon oxide.

(6) The present invention provides the method of any one of (1) to (5) above, wherein the silicon or the silicon oxide is added in an amount of greater than 0.131 part by weight and less than 0.142 part by weight based on 100 parts by weight of the lithium compound-containing solution.

(7) The present invention provides the method of any one of (1) to (5) above, wherein the stirring in step (S1) is performed by performing primary stirring for 1 hour or more in a temperature range of 30°C to 90°C, and performing secondary stirring while cooling to room temperature, wherein the primary stirring and the secondary stirring are performed for a same amount of time.

(8) The present invention provides the method of any one of (1) to (6) above, wherein the sintering in step (S2) is performed by performing a heat treatment in a temperature range of 850°C to 900°C for 1 hour to 2 hours in an inert gas atmosphere.

## ADVANTAGEOUS EFFECTS

Since a method of preparing a lithium silicon oxide composite according to the present invention includes a step of performing prelithiation by adding silicon or silicon oxide to a lithium compound-containing solution having a concentration of greater than 0.5 M and less than 1.0 M, in which the lithium-containing compound is dissolved at a specific concentration, and stirring and heat-treating the solution, the method may prepare a lithium silicon oxide composite in which crystalline lithium silicate ($Li_2SiO_3$) and $SiO_2$ do not exist and initial capacity and capacity retention are excellent by suppressing hydrogen generation even if the lithium silicon oxide composite is prepared as an aqueous negative electrode material slurry.

## MODE FOR CARRYING OUT THE INVENTION

Hereinafter, the present invention will be described in more detail to allow for a clearer understanding of the present invention.

It will be understood that words or terms used in the description and claims of the present invention shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

**Method of Preparing Lithium Silicon Oxide**

The present invention provides a method of preparing a lithium silicon oxide composite that is useful as a negative electrode material in which there is almost no change in viscosity and hydrogen generation is suppressed when a slurry is prepared by a water-based process while initial capacity and capacity retention are excellent.

The method of preparing a lithium silicon oxide composite according to an embodiment of the present invention is characterized in that it includes steps of: adding silicon or silicon oxide (SiOx, $0<x \leq 2$) to a lithium compound-containing solution and stirring the solution in an inert gas atmosphere (S1); and separating particles formed, and drying and sintering the particles (S2), wherein a concentration of the lithium compound-containing solution is greater than 0.5 M and less than 1.0 M.

A graphite-based negative electrode material is known as a negative electrode material, and the graphite-based negative electrode material exhibits stable capacity retention characteristics even during long cycles due to excellent structural stability even during intercalation and deintercalation of lithium, but is unsuitable as a high-capacity and high-output material currently required due to its low theoretical capacity (350 mAh/g for $LiC_6$), and thus, silicon or silicon oxide having a theoretical capacity (~4200 mAh/g for $Li_{4.4}Si$) of about 10 times higher than that of graphite is attracting attention. However, the silicon-based negative electrode material consumes about three times more lithium than the graphite-based negative electrode material, and has a problem of increased irreversible capacity, and thus, a method of improving initial efficiency by prelithiation of lithium (Li) is being attempted to solve an initial efficiency problem caused by an irreversible reaction of lithium ions.

A prelithiated silicon-based negative electrode material has an advantage in terms of cycle characteristics due to excellent charge and discharge efficiency, but has a problem of capacity reduction and gas generation during a process. Particularly, the prelithiated silicon-based negative electrode material is typically prepared by heat-treating lithium metal and a silicon-based negative electrode material together, and the prelithiated silicon-based negative electrode material generally contains crystalline lithium silicates ($Li_4SiO_4$, $Li_2SiO_3$, $Li_2Si_2O_5$) and crystalline silica ($SiO_2$), wherein, since $Li_4SiO_4$ and $Li_2SiO_3$ among the crystalline lithium silicates are easily dissolved in water, they are dissolved in water when an aqueous negative electrode slurry is prepared using the prelithiated silicon-based negative electrode material to cause hydrogen gas generation while silicon is oxidized and the water is reduced through a contact between the silicon and the water and this changes viscosity of the slurry and degrades coating characteristics of the slurry to cause serious defects in a slurry coating, and, as a result, a fatal problem, such as a rapid decrease in capacity due to an electrical short circuit with a current collector, may occur. Also, in a case in which the silica remains in the prelithiated silicon-based negative electrode material, since the silica consumes lithium by forming irreversible crystalline lithium silicate during a charging process, it may cause a problem of reducing the initial efficiency.

However, since the method of preparing a lithium silicon oxide composite according to the embodiment of the present invention prepare a lithium silicon oxide composite by adding a silicon-based negative electrode material to a lithium compound-containing solution having a concentration of greater than 0.5 M and less than 1.0 M, in which the lithium compound is dissolved at a specific concentration in an organic solvent, and stirring and heat-treating the solution, an appropriate oxidation-reduction process occurs as Li is intercalated and diffused into the silicon-based negative electrode material, and thus, a lithium silicon oxide composite with no residual crystalline lithium silicate and silica may be prepared.

Hereinafter, the method of preparing a lithium silicon oxide composite according to the embodiment of the present invention will be described in more detail step by step.

*Step (S1)*

Step (S1) is a step of forming lithium silicon oxide composite particles by prelithiation of silicon or silicon oxide, wherein it is performed by adding silicon or silicon oxide (SiOx, $0<x \leq 2$) to a lithium compound-containing solution and stirring the solution in an inert gas atmosphere, wherein a concentration of the lithium biphenyl-based compound-containing solution may be greater than 0.5 M and less than 1.0 M.

Herein, the expression "the concentration of the lithium compound-containing solution is greater than 0.5 M and less than 1.0 M" means that the lithium compound is dissolved in an amount of greater than 0.5 mol and less than 1.0 mol per 1 L of the solution.

In an embodiment of the present invention, the silicon and the silicon oxide may each have an amorphous structure, wherein the silicon may have an average particle diameter ($D_{50}$) of 1 $\mu$m to 20 $\mu$m, and the silicon oxide may have an average particle diameter ($D_{50}$) of 5 nm to 1 $\mu$m.

Also, the silicon and silicon oxide may include a carbon coating layer on surfaces thereof, and, in this case, a thickness of the carbon coating layer may be in a range of 1 nm to 1 $\mu$m, or 100 nm to 1 $\mu$m.

The carbon coating layer includes a carbon-based material, and the carbon-based material may include at least one of amorphous carbon and crystalline carbon.

The crystalline carbon may further improve conductivity of the negative electrode material, and, for example, may be at least one selected from the group consisting of fullerenes, carbon nanotubes, and graphene.

Also, the amorphous carbon appropriately maintains strength of the carbon coating layer, and, for example, may be at least one carbide selected from the group consisting of tar, pitch, and other organic substances, or a carbon-based material formed by using hydrocarbon as a source of chemical vapor deposition, wherein the carbides of the other organic substances may be carbides of sucrose, glucose, galactose, fructose, lactose, mannose, ribose, aldohexose, or ketohexose, and combinations thereof.

Furthermore, the hydrocarbon may be an unsubstituted or substituted aliphatic or alicyclic hydrocarbon and an unsubstituted or substituted aromatic hydrocarbon, and, for example, may be methane, ethane, ethylene, acetylene, propane, butane, butene, pentane, isobutane or hexane, benzene, toluene, xylene, styrene, ethylbenzene, diphenylmethane, naphthalene, phenol, cresol, nitrobenzene, chlorobenzene, indene, coumarone, pyridine, anthracene, or phenanthrene.

In an embodiment of the present invention, the silicon or the silicon oxide may be added in an amount of greater than 0.131 part by weight and less than 0.142 part by weight based on 100 parts by weight of the lithium compound-containing solution.

Herein, the lithium compound-containing solution may be prepared by adding a polycyclic aromatic compound or a linear polyphenylene compound to an organic solvent and stirring to prepare a polycyclic aromatic compound solution or a linear polyphenylene compound solution, and adding lithium particles to the polycyclic aromatic compound solution or the linear polyphenylene compound solution and performing a reaction.

Also, the lithium particles react with the polycyclic aromatic compound or the linear polyphenylene compound in the polycyclic aromatic compound solution or the linear polyphenylene compound solution in a molar ratio of 1:1.

Furthermore, the polycyclic aromatic compound may be at least one selected from the group consisting of naphthalene, anthracene, phenanthrene, naphthacene, pentacene, pyrene, picene, triphenylene, coronene, chrysene, fluorene, and 9,9-dimethylfluorene, and the linear polyphenylene compound may be at least one selected from the group consisting of biphenyl, terphenyl, and 4,4-dimethylbiphenyl. Specifically, the polycyclic aromatic compound may be any one selected from naphthalene, fluorene, and 9,9-dimethylfluorene, and the linear polyphenylene compound may be biphenyl or 4,4-dimethylbiphenyl.

Also, an ether-based solvent, a ketone-based solvent, an ester-based solvent, an alcohol-based solvent, an amine-based solvent, or a mixed solvent thereof may be used as the organic solvent, and, for example, the ether-based solvent may be diethyl ether, tert-butyl methyl ether, tetrahydrofuran, 2-methyltetrahydrofuran, dioxane, 1,2-dimethoxyethene, diethylene glycol dimethyl ether, triethylene glycol dimethyl ether, tetraethylene glycol dimethyl ether, or a mixed solvent thereof. Among them, tetrahydrofuran, 2-methyltetrahydrofuran, dioxane, and 1,2-dimethoxyethane may be preferable.

Furthermore, acetone or acetophenone may be used as the ketone-based solvent, and methyl formate, methyl acetate, ethyl acetate, propyl acetate, isopropyl acetate, or a mixed solvent thereof may be used as the ester-based solvent.

Also, methanol, ethanol, propanol, isopropyl alcohol, or a mixed solvent thereof may be used as the alcohol-based solvent, and methylamine, ethylamine, ethylenediamine, or a mixed solvent thereof may be used as the amine-based solvent.

In addition, the reaction for obtaining the lithium compound-containing solution may be performed in a temperature range of 20°C to 90°C while stirring for 0.5 hours to 6.0 hours, and the lithium compound may be formed more effectively by stirring at the above temperature for the above time.

The stirring in step (S1) is performed by performing primary stirring for 1 hour or more in a temperature range of 30°C to 90°C, and performing secondary stirring while cooling to room temperature when considering appropriate prelithiation and control of lithium ion diffusion rate, wherein the primary stirring and the secondary stirring may be performed for the same amount of time.

*Step (S2)*

Step (S2) is a step for preparing a lithium silicon oxide composite by separating the lithium silicon oxide composite particles formed in step (S1) and drying and sintering the particles, wherein it may be performed by separating the particles formed in step (S1) and then drying and sintering the particles.

The formed particles may be obtained by separating solid particles from the solution by conventional means in the art, for example, a supernatant and the formed particles, as precipitates, may be separated by centrifuging the solution.

The drying may be performed by conventional means in the art, and, for example, may be performed by holding the particles in a temperature range of 70°C to 90°C or 75°C to 85°C for 2 hours or more.

Also, the sintering may be performed by performing a heat treatment in a temperature range of 850°C to 900°C for 1 hour to 2 hours in an inert gas atmosphere.

In the method of preparing a lithium silicon oxide composite according to the embodiment of the present invention, the inert gas may be argon, nitrogen, or a combination thereof.

**Lithium Silicon Oxide Composite**

Since the lithium silicon oxide composite, which is prepared from the method of preparing a lithium silicon oxide composite according to the present invention, does not include crystalline lithium silicate ($Li_2SiO_3$) or includes only a very small amount of the crystalline lithium silicate, hydrogen generation is prevented during the preparation of the slurry by the water-based process, and thus, there are no coating defects and reduced adhesion, and initial capacity characteristics and capacity retention may be excellent.

As another example, the lithium silicon oxide composite may include silicon, silicon oxide, and a lithium silicon-based compound, and the lithium silicon-based compound is a compound that is formed by doping silicon or silicon oxide with lithium metal while the silicon or silicon oxide is prelithiated by the above-described preparation method, wherein, for example, it may include at least one of lithium disilicate and lithium silicide. As another example, the lithium silicon-based compound may further include lithium silicate in some cases, but, in this case, an amount of the lithium silicate may be small at less than 5 wt%.

The lithium silicide may include $Li_ySi$ (2<y<5), and, for example, may be at least one selected from the group consisting of $Li_{4.4}Si$, $Li_{3.75}Si$, $Li_{3.25}Si$, and $Li_{2.33}Si$.

Also, in an X-ray diffraction (XRD) pattern measured using non-monochromated Cu K$\alpha$ radiation, the lithium silicon oxide composite according to an embodiment of the present invention exhibits peaks at 2$\theta$ positions of 23.8$\pm$0.5°, 24.3$\pm$0.5°, and 24.7$\pm$0.5°, exhibits no peak at 27.0$\pm$0.2°, and satisfies Equation 1 below.

$$[Equation\ 1]$$

$$y_{sio2,max} \leq 0.4 \cdot y_{Si,111}$$

In Equation 1,
$y_{sio2,max}$ is a peak height of the highest peak among $SiO_2$ peaks corresponding to positions of 2$\theta$ = 20.7$\pm$0.5°, 21.6$\pm$0.5°, and 26.5$\pm$0.5° in the XRD pattern measured using non-monochromated Cu K$\alpha$ radiation, and $y_{Si,111}$ is a height of a silicon (Si) peak corresponding to a position of 2$\theta$ = 28.5$\pm$0.5° in the XRD pattern.

Furthermore, the lithium silicon oxide composite according to the embodiment of the present invention is characterized in that it satisfies Equation 2 below.

$$[Equation\ 2]$$

$$I_{q,100}+I_{c,111}+I_{q,011} \leq 0.3 \cdot I_{si,111}$$

In Equation 2,
$I_{q,100}$, $I_{c,111}$, and $I_{q,011}$ are integrated intensities of the $SiO_2$ peaks corresponding to the positions of 2$\theta$ = 20.7$\pm$0.5°, 21.6$\pm$0.5°, and 26.5$\pm$0.5°, respectively, in the XRD pattern measured using non-monochromated Cu K$\alpha$ radiation, and $T_{si,111}$ is an integrated intensity of the Si peak corresponding to the position of 2$\theta$ = 28.5$\pm$0.5° in the XRD pattern.

As another example, the lithium silicon oxide composite satisfies Equation 2 while satisfying Equation 1 and the presence or absence of a peak in a specific position range in the XRD pattern.

As another example, the lithium silicon oxide composite includes a first peak having a width of 0.2 ppm to 2.0 ppm and a second peak having a width of 3 ppm to 10 ppm in a range of -88 ppm to -99 ppm in a $^{29}$Si NMR spectrum obtained by $^{29}$Si solid state MAS (magic angle spinning) nuclear magnetic resonance (NMR) measurement, wherein a ratio (first peak/second peak) of an integral value of the first peak to an integral value of the second peak may be greater than 0.22 and less than or equal to 0.31.

As another example, the lithium silicon oxide composite may have no peak in a chemical shift range of -71 ppm to -77 ppm in the $^{29}$Si NMR spectrum obtained by $^{29}$Si solid state MAS (magic angle spinning) NMR measurement.

Also, the lithium silicon oxide composite according to the embodiment of the present invention may satisfy Equation 3 below.

$$[Equation\ 3]$$

$$0.45 \leq PX_{512}/PX_{T}$$

In Equation 3,

$PX_T$ is the total number of pixels which is obtained by evenly dividing a region of 150 $\mu$m $\times$ 150 $\mu$m on a surface of the lithium silicon oxide into pixels of 5 $\mu$m $\times$ 5 $\mu$m using a Raman mapping technique, wherein it is 900, and $PX_{512}$ is the number of pixels having a maximum peak between 512 cm$^{-1}$ and 520 cm$^{-1}$ in a Raman spectrum having a Raman shift of 200 cm$^{-1}$ to 520 cm$^{-1}$ which is obtained by the Raman mapping technique for each of the total 900 pixels.

As another example, the lithium silicon oxide composite may satisfy Equation 4 below.

$$[\text{Equation 4}]$$

$$5 \leq PX_{512}/PX_{500}$$

In Equation 4, $PX_{512}$ is the number of pixels having a maximum peak between 512 cm$^{-1}$ and 520 cm$^{-1}$ in the Raman spectrum having a Raman shift of 200 cm$^{-1}$ to 520 cm$^{-1}$ for each of the total 900 pixels which are obtained by evenly dividing the region of 150 $\mu$m $\times$ 150 $\mu$m on the surface of the lithium silicon oxide into the pixels of 5 $\mu$m $\times$ 5 $\mu$m using the Raman mapping technique, and $PX_{500}$ is the number of pixels having a maximum peak between 490 cm$^{-1}$ and 500 cm$^{-1}$ in the Raman spectrum having a Raman shift of 200 cm$^{-1}$ to 520 cm$^{-1}$ for each of the total 900 pixels.

As another example, the lithium silicon oxide composite satisfies Equation 4 while satisfying Equation 3.

In a Raman spectrum of crystalline Si, a peak is observed at a Raman shift of more than 500 cm$^{-1}$ and less than or equal to 520 cm$^{-1}$, and, with respect to amorphous Si, a peak is observed at a Raman shift of 490 cm$^{-1}$ to 500 cm$^{-1}$. Thus, in the Raman spectrum measured by the Raman mapping technique according to an embodiment of the present invention, a pixel having a maximum peak at 512 cm$^{-1}$ indicates a pixel in which a ratio of the crystalline Si is dominant, and a pixel having a maximum peak at 500 cm$^{-1}$ indicates a pixel in which a ratio of the amorphous Si is dominant.

## Negative Electrode

The present invention provides a negative electrode including the lithium silicon oxide composite.

The negative electrode according to an embodiment of the present invention includes a conductive metal current collector; and a negative electrode material layer disposed on at least one surface of the current collector, and the negative electrode material layer includes the above-described lithium silicon oxide composite.

Since the negative electrode according to the present invention includes the negative electrode material layer including the lithium silicon oxide composite, initial efficiency is excellent and volume expansion of the negative electrode is suppressed, and thus, capacity retention and long-term stability may be excellent.

The conductive metal current collector includes a highly conductive metal, wherein the conductive metal current collector is not particularly limited as long as it is nonreactive in a voltage range of a battery. For example, stainless steel, aluminum, nickel, titanium, fired carbon, or aluminum or stainless steel that is surface-treated with one of carbon, nickel, titanium, silver, or the like may be used. Also, the current collector may have a thickness of 3 $\mu$m to 500 $\mu$m.

The negative electrode may be prepared by mixing an aqueous solvent, the lithium silicon oxide composite, a binder, and a conductive agent to prepare a negative electrode material slurry, applying the negative electrode material slurry onto at least one surface of the conductive metal current collector, and drying the negative electrode material slurry. Herein, the aqueous solvent may be water.

Also, the conductive agent may include any one without particular limitation as long as it has electron conductivity without causing chemical changes, but specifically, the conductive agent may include graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

Furthermore, the binder may be typically added in an amount of 0.1 wt% to 10 wt% based on a total weight of the negative electrode material layer, and examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, or various copolymers thereof.

## Lithium Secondary Battery

The present invention provides a lithium secondary battery including the above negative electrode.

According to an embodiment of the present invention, the lithium secondary battery may include the negative electrode; a positive electrode; a separator disposed between the positive electrode and the negative electrode, and an electrolyte. Also, the lithium secondary battery may further optionally include a battery container accommodating an electrode assembly of the negative electrode, the positive electrode, and the separator, and a sealing member sealing the battery container.

According to an embodiment of the present invention, the positive electrode may include a positive electrode collector and a positive electrode material layer disposed on the positive electrode collector.

According to an embodiment of the present invention, the positive electrode collector is not particularly limited as long as it has high conductivity without causing chemical changes in the battery, and, for example, copper, stainless steel, aluminum, nickel, titanium, fired carbon, copper or stainless steel that is surface-treated with one of carbon, nickel, titanium, silver, or the like, or an aluminum-cadmium alloy may be used. Also, the positive electrode collector may typically have a thickness of 3 $\mu$m to 500 $\mu$m, and microscopic irregularities may be formed on the surface to strengthen adhesion of the positive electrode material. The positive electrode collector, for example, may be used in various shapes such as that of a film, a sheet, a foil, a net, a porous body, a foam body, a non-woven fabric body, and the like.

According to an embodiment of the present invention, the positive electrode material layer may optionally include a binder and a conductive agent in addition to the positive electrode material.

According to an embodiment of the present invention, the positive electrode material may be one selected from the group consisting of $LiCoO_2$, $LiCoPO_4$, $LiNiO_2$, $Li_xNi_aCo_bM^1_cM^2_dO_2$ ($M^1$ and $M^2$ are each independently one selected from the group consisting of aluminum (Al), manganese (Mn), copper (Cu), iron (Fe), vanadium (V), chromium (Cr), molybdenum (Mo), gallium (Ga), boron (B), tungsten (W), molybdenum (Mo), niobium (Nb), magnesium (Mg), hafnium (Hf), tantalum (Ta), lanthanum (La), titanium (Ti), strontium (Sr), barium (Ba), cerium (Ce), fluorine (F), phosphorus (P), sulfur (S), and yttrium (Y), and $0.9 \leq x \leq 1.1$, $0 < a < 1.0$, $0 < b < 1.0$, $0 \leq c < 0.5$, $0 \leq d < 0.5$, and $a+b+c+d=1$.), $LiMnO_2$, $LiMnO_3$, $LiMn_2O_3$, $LiMn_2O_4$, $LiMn_{2-e}M^3_eO_2$ ($M^3$ is at least one selected from the group consisting of cobalt (Co), nickel (Ni), Fe, Cr, zinc (Zn), and Ta, and $0.01 \leq e \leq 0.1$.), $Li_2Mn_3M^4O_8$ ($M^4$ is at least one selected from the group consisting of Ci, Ni, Fe, Cu, and Zn.), $LiFePO_4$, $Li_2CuO_2$, $LiV_3O_8$, $V_2O_5$, $Cu_2V_2O_7$, and lithium metal.

According to an embodiment of the present invention, the binder is a component that assists in the binding between the conductive agent, the positive electrode material, and the current collector, wherein the binder is commonly added in an amount of 0.1 wt% to 10 wt% based on a total weight of the positive electrode material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, or various copolymers thereof.

According to an embodiment of the present invention, the conductive agent of the positive electrode material layer is a component for further improving conductivity of the positive electrode material, wherein it may be added in an amount of 10 wt% or less, preferably, 5 wt% or less based on the total weight of the positive electrode material layer. The conductive agent is not particularly limited as long as it has conductivity without causing chemical changes in the battery, and, for example, a conductive material, such as: graphite such as natural graphite or artificial graphite; carbon black such as acetylene black, Ketjen black, channel black, furnace black, lamp black, or thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

According to an embodiment of the present invention, the positive electrode may be prepared by applying a slurry for forming a positive electrode material layer, which is prepared by dissolving or dispersing the positive electrode material as well as optionally the binder and the conductive agent in a solvent, onto the positive electrode collector and drying, or may be prepared by casting the slurry for forming a positive electrode material layer on a separate support and then laminating a film separated from the support on the positive electrode collector.

According to an embodiment of the present invention, the separator separates the negative electrode and the positive electrode and provides a movement path of lithium ions, wherein any separator may be used without particular limitation as long as it is typically used as the separator in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and the separator having a single layer or multilayer structure may be optionally used.

According to an embodiment of the present invention, the electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto. As a specific example, the electrolyte may include an organic solvent and a lithium salt.

According to an embodiment of the present invention, any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

According to an embodiment of the present invention, the lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2 (CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAl0_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

According to an embodiment of the present invention, in order to improve life characteristics of the battery, suppress the reduction in battery capacity, and improve discharge capacity of the battery, for example, at least one additive selected from the group consisting of vinylene carbonate (VC), vinyl ethylene carbonate (VEC), fluoro ethylene carbonate (FEC), propane sultone (PS), 1,3-propane sultone (PRS), ethylene sulfate (Esa), succinonitrile (SN), adiponitrile (AN), hexane tricarbonitrile (HTCN), $\gamma$-butyrolactone, biphenyl (BP), cyclohexyl benzene (CHB), and tert-amyl benzene (TAB), or at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the negative electrode according to the present invention stably exhibits excellent capacity characteristics, output characteristics, and life characteristics, the lithium secondary battery is suitable for portable devices, such as mobile phones, notebook computers, and digital cameras, and electric cars such as hybrid electric vehicle (HEV) and electric vehicle (EV).

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Thus, according to an embodiment of the present invention, a battery module including the lithium secondary battery as a unit cell and a battery pack including the battery module are provided.

According to an embodiment of the present invention, the battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

## Examples

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example 1

2.77 g of biphenyl was added to 30 ml of 2-methyltetrahydrofuran and stirred for 10 minutes, and 0.126 g of lithium (Li) powder was added thereto when the solution turned transparent and stirred for 6 hours to prepare a dark green 0.6 M LiBP solution.

4 g of SiOx/C (0<x≤2) powder having an average particle diameter ($D_{50}$) of 5 $\mu$m and a carbon coating layer on a surface thereof was added to the LiBP solution and stirred at 80°C for 1 hour. Thereafter, the solution was additionally stirred for 1 hour while being cooled to room temperature (25°C). In this case, all processes were performed in an argon atmosphere.

Thereafter, the solution was centrifuged to separate only powder particles, and the separated particles were dried at 80°C for 4 hours, heated to 900°C, and heat-treated for 2 hours in an argon atmosphere to prepare a lithium silicon oxide composite.

## Example 2

A lithium silicon oxide composite was prepared in the same manner as in Example 1 except that, in Example 1, 3.696 g of biphenyl and 0.168 g of Li powder were used to prepare a 0.8 M LiBP solution, and the LiBP solution was used.

## Comparative Example 1

A lithium silicon oxide composite was prepared in the same manner as in Example 1 except that, in Example 1, 1.386 g of biphenyl and 0.063 g of Li powder were used to prepare a 0.3 M LiBP solution, and the LiBP solution was used.

## Comparative Example 2

A lithium silicon oxide composite was prepared in the same manner as in Example 1 except that, in Example 1, 2.31 g of biphenyl and 0.105 g of Li powder were used to prepare a 0.5 M LiBP solution, and the LiBP solution was used.

## Comparative Example 3

A lithium silicon oxide composite was prepared in the same manner as in Example 1 except that, in Example 1, 4.62 g of biphenyl and 0.21 g of Li powder were used to prepare a 1.0 M LiBP solution, and the LiBP solution was used.

## Experimental Example 1

XRD analysis of each lithium silicon oxide composite prepared in the examples and the comparative examples was performed to confirm the presence of lithium silicate ($Li_2SiO_3$), lithium disilicate ($Li_2Si_2O_5$), and silica ($SiO_2$), and the results thereof are presented in Table 1.

The XRD analysis was performed at a voltage of 49 kV, a current of 40 mA, $2\theta$ (Bragg angle) = 15°~95°, and a scan speed = 0.02°/0.20 sec for Cu K$\alpha$ radiation using a Bruker D8 ADNAVCE powder x-ray diffractometer (Bruker Corporation), the presence of the lithium disilicate ($Li_2Si_2O_5$) was confirmed by the presence or absence of peaks at positions of $2\theta$ = 23.5$\pm$0.5°, 24.0$\pm$0.5°, and 24.5$\pm$0.5° in a spectrum, the presence of the lithium silicate ($Li_2SiO_3$) was confirmed by the presence or absence of a peak at a position of $2\theta$ = 27.0$\pm$0.5°, and the presence of the silica was confirmed by the presence or absence of peaks at positions of $2\theta$ = 20.7$\pm$0.5°, 21.6$\pm$0.5°, and 26.5$\pm$0.5°.

[Table 1]

| Category | Detected phases | | |
|---|---|---|---|
| | $Li_2SiO_3$ | $Li_2Si_2O_5$ | $SiO_2$ |
| Example 1 | X | ○ | X |
| Example 2 | X | ○ | X |
| Comparative Example 1 | X | ○ | ○ |
| Comparative Example 2 | X | ○ | ○ |
| Comparative Example 3 | ○ | ○ | X |

As confirmed by Table 1 above, lithium silicate peaks and silica peaks were not observed in XRD patterns of the lithium silicon oxide composites of Examples 1 and 2.

In contrast, no lithium silicate peak was observed in XRD patterns of the lithium silicon oxide composites of Comparative Examples 1 and 2, but silica peaks were observed, and a lithium silicate peak was observed in Comparative Example 3.

**Experimental Example 2**

The lithium silicon oxide composites prepared in the examples and comparative examples were used to prepare aqueous negative electrode material slurries, gas generation amounts were measured, and the results thereof are presented in Table 2 below.

Each lithium silicon oxide composite, graphite, Super-C65 as a conductive agent, a styrene-butadiene rubber as a binder, and carboxymethyl cellulose were mixed in a weight ratio of 19.2:77:1:1.1:1.6 in a water solvent to prepare each aqueous negative electrode material slurry. Thereafter, 5 g of the aqueous negative electrode material slurry was put in an aluminum pouch, sealed, and then stored in an oven at 60°C, and a gas generation amount was measured using a specific gravity balance.

[Table 2]

| Category | Gas generation amount per unit mass of negative electrode active material (ml/g) | | | | | | |
|---|---|---|---|---|---|---|---|
| | 16 hrs | 40 hrs | 64 hrs | 88 hrs | 112 hrs | 136 hrs | 160 hrs |
| Example 1 | 5 | - | - | 5 | 6 | 6 | 6 |
| Example 2 | 4 | 5 | - | - | 6 | 6 | 6 |
| Comparative Example 1 | 5 | 5 | - | - | 6 | 6 | 5 |
| Comparative Example 2 | 9 | 10 | 10 | 10 | - | - | 10 |
| Comparative Example 3 | 18 | 31 | - | - | 41 | 44 | 48 |

As confirmed by Table 2 above, it was confirmed that the negative electrode material slurries including the lithium silicon oxide composites of Examples 1 and 2 exhibited a reduced gas generation amount in comparison to the negative electrode material slurry including the lithium silicon oxide composite of Comparative Example 3 in which the lithium silicate peak was observed.

The negative electrode material slurry including the lithium silicon oxide composite of Comparative Example 1, in which no lithium silicate peak was observed as in the examples, exhibited an equivalent gas generation amount to the examples, but exhibited a significantly inferior tendency in initial capacity as confirmed in Experimental Example 3 to be described later.

Also, the lithium silicon oxide composite of Comparative Example 3 had a decrease in initial efficiency in comparison to the examples as illustrated in Table 3 to be described later even though no silica peak was observed in an XRD pattern, and it is predicted that this was because the biphenyl, which had been used during the preparation, remained and was carbonized during the heat treatment to function as a byproduct.

**Experimental Example 3**

Half cells were prepared using the lithium silicon oxide composites of the examples and comparative examples, respectively, battery characteristics were measured, and the results thereof are presented in Table 3 below.

After each lithium silicon oxide composite was mixed with Super-C65, as a conductive agent, and Li-PAA, as a binder, in a weight ratio of 70:15:15 to prepare a negative electrode slurry, the negative electrode slurry was then applied onto a copper foil, dried, rolled, and punched to prepare a negative electrode.

Lithium metal was used as a counter electrode, a porous polyethylene separator was disposed between the negative electrode and the lithium metal, and a coin half-cell was prepared by injecting an electrolyte solution in which 1 M $LiPF_6$, 1.5 wt% VC, and 0.5 wt% PS were dissolved in a solution in which ethylene carbonate (EC) and ethyl methyl carbonate (EMC) were mixed in a volume ratio of 30:70.

After the coin half-cell was left standing for 24 hours, it was charged at a constant current (CC) of 0.1 C to 0.005 V in a range of 0.005 to 1.5 V vs. Li/Li+, then charged at a constant voltage (CV) until the charge current reached 0.02 C, and discharged at a constant current (CC) of 0.1 C to 1.5 V to measure initial efficiency and charge and discharge capacities in a first cycle.

[Table 3]

| Category | Charge capacity (mAh/g) | Discharge capacity (mAh/g) | Initial efficiency (%) |
|---|---|---|---|
| Example 1 | 1640 | 1300 | 79 |
| Example 2 | 1461 | 1112 | 76 |
| Comparative Example 1 | 1751 | 1141 | 68 |
| Comparative Example 2 | 1585 | 1189 | 75 |
| Comparative Example 3 | 1419 | 1010 | 71 |

As confirmed by Table 3 above, it may be confirmed that Examples 1 and 2 had better initial efficiencies than Comparative Examples 1 to 3.

## Claims

1. A method of preparing a lithium silicon oxide composite, the method comprising steps of:

    adding silicon or silicon oxide (SiOx, 0<x≤2) to a lithium compound-containing solution and stirring the solution in an inert gas atmosphere (S1); and
    separating particles formed, and drying and sintering the particles (S2),
    wherein a concentration of the lithium compound-containing solution is greater than 0.5 M and less than 1.0 M.

2. The method of claim 1, wherein the lithium compound-containing solution is prepared by adding a polycyclic aromatic compound or a linear polyphenylene compound to an organic solvent and stirring to prepare a polycyclic aromatic compound solution or a linear polyphenylene compound solution, and adding lithium particles to the polycyclic aromatic compound solution or the linear polyphenylene compound solution and performing a reaction.

3. The method of claim 2, wherein the polycyclic aromatic compound is at least one selected from the group consisting of naphthalene, anthracene, phenanthrene, naphthacene, pentacene, pyrene, picene, triphenylene, coronene, chrysene, fluorene, and 9,9-dimethylfluorene.

4. The method of claim 2, wherein the linear polyphenylene compound is at least one selected from the group consisting of biphenyl, terphenyl, and 4,4-dimethylbiphenyl.

5. The method of claim 1, wherein the silicon and the silicon oxide comprise a carbon coating layer on surfaces of the silicon and the silicon oxide.

6. The method of claim 1, wherein the silicon or the silicon oxide is added in an amount of greater than 0.131 part by weight and less than 0.142 part by weight based on 100 parts by weight of the lithium compound-containing solution.

7. The method of claim 1, wherein the stirring in step (S1) is performed by performing primary stirring for 1 hour or more in a temperature range of 30°C to 90°C, and performing secondary stirring while cooling to room temperature, wherein the primary stirring and the secondary stirring are performed for a same amount of time.

8. The method of claim 1, wherein the sintering in step (S2) is performed by performing a heat treatment in a temperature range of 850°C to 900°C for 1 hour to 2 hours in an inert gas atmosphere.

## INTERNATIONAL SEARCH REPORT

| International application No. |
| --- |
| **PCT/KR2024/007991** |

| A. | CLASSIFICATION OF SUBJECT MATTER |
| --- | --- |

**C01B 33/32**(2006.01)i; **H01M 4/36**(2006.01)i; **H01M 4/58**(2010.01)i; **H01M 4/62**(2006.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

C01B 33/32(2006.01); C01B 33/02(2006.01); C01B 33/06(2006.01); H01G 11/06(2013.01); H01M 10/0525(2010.01); H01M 10/0567(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전리튬화(pre-lithiation), 실리콘(silicon, SiOx), 리튬실리콘산화물(lithium silicon oxide), 바이페닐(biphenyl), 음극(anode, negative electrode)

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| Y | YAN, Ming-Yan et al. Enabling SiOx/C Anode with High Initial Coulombic Efficiency through a Chemical Pre-Lithiation Strategy for High-Energy-Density Lithium-Ion Batteries. Applied Materials & Interfaces. 2020, vol. 12, pp. 27202-27209. <br> See page 27203, and Fig. 1. | | 1-8 |
| Y | KR 10-2021-0137625 A (KOREA INSTITUTE OF SCIENCE AND TECHNOLOGY) 18 November 2021 (2021-11-18) <br> See paragraphs [0054], [0103] and [0104]. | | 1-8 |
| A | JIANG, F. et al. SiOx/C anodes with high initial coulombic efficiency through the synergy effect of pre-lithiation and fluoroethylene carbonate for lithium-ion batteries. Electrochimica Acta. 2021, vol. 398, thesis no. 139315, inner pp. 1-9. <br> See inner page 2. | | 1-8 |
| A | JANG, J. et al. Molecularly Tailored Lithium–Arene Complex Enables Chemical Prelithiation of High-Capacity Lithium-Ion Battery Anodes. Angewandte Chemie. 2020, vol. 59, pp. 14473-14480. <br> See abstract, page 14582, and Scheme 2. | | 1-8 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 September 2024** | **13 September 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/007991** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2022-106635 A (TOYOTA CENTRAL R&D LABS INC. et al.) 20 July 2022 (2022-07-20)<br>      See paragraph [0042]. | 1-8 |
| A | CN 114221022 A (SICHUAN JIROCK SCIENCE AND TECHNOLOGY CO., LTD.) 22 March 2022 (2022-03-22)<br>      See paragraph [0015]. | 1-8 |

Form PCT/ISA/210 (second sheet) (July 2022)

**INTERNATIONAL SEARCH REPORT**
Information on patent family members

International application No.

**PCT/KR2024/007991**

| Patent document cited in search report | | | Publication date (day/month/year) | Patent family member(s) | | | Publication date (day/month/year) |
|---|---|---|---|---|---|---|---|
| KR | 10-2021-0137625 | A | 18 November 2021 | JP | 2021-180171 | A | 18 November 2021 |
| | | | | JP | 7204725 | B2 | 16 January 2023 |
| | | | | KR | 10-2553610 | B1 | 11 July 2023 |
| | | | | US | 11905302 | B2 | 20 February 2024 |
| | | | | US | 2021-0347787 | A1 | 11 November 2021 |
| | | | | WO | 2021-230424 | A1 | 18 November 2021 |
| JP | 2022-106635 | A | 20 July 2022 | | None | | |
| CN | 114221022 | A | 22 March 2022 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230075099

- KR 1020140091388 A